# FASCICULE DE BREVET EUROPEEN

(11) **EP 3 295 613 B1**
(45) Date de publication et mention de la délivrance du brevet: **17.04.2019**
(21) Numéro de dépôt: 16726917.4
(22) Date de dépôt: 02.05.2016
(51) Int. Cl.: H04L 12/403, H04L 12/911

(54) **PROCÉDÉ ET DISPOSITIF DE CONTRÔLE DE LA TRANSMISSION DE TRAMES DANS UN RÉSEAU VIDÉO BIDIRECTIONNEL.**
VERFAHREN UND VORRICHTUNG ZUR STEUERUNG DER ÜBERTRAGUNG VON FRAMES IN EINEM BIDIREKTIONALEN VIDEONETZWERK
METHOD AND DEVICE FOR CONTROLLING THE TRANSMISSION OF FRAMES IN A BIDIRECTIONAL VIDEO NETWORK

(30) Priorité: 12.05.2015 FR 1554244
(43) Date de publication de la demande: 21.03.2018
(73) Titulaire: PSA AUTOMOBILES S.A., 78300 Poissy (FR)
(72) Inventeur: BOISSERIE, Antony, 91320 Wissous (FR); ADJADJ, Mehdi, 92370 CHAVILLE (FR); POUSSARD, Julien, 75017 Paris (FR)
(74) Mandataire: Jeannin, Laurent Jean-Pierre
(86) Numéro de dépôt international: PCT/FR2016/051028
(87) Numéro de publication internationale: WO 2016/181053

(56) Documents cités:
- EP-A2- 0 827 308
- WO-A1-2015/028731
- US-A1- 2015 063 371

## Description

L'invention concerne les réseaux de communication qui sont adaptés à la transmission bidirectionnelle de trames de données non vidéo et à la transmission unidirectionnelle de trames de données vidéo entre des organes maître et esclave, et plus précisément le contrôle de la transmission de trames de données non vidéo entre de tels organes.

Dans certains réseaux de communication du type précités, et notamment dans ceux dits « à signalisation différentielle à basse tension » (ou LVDS - « Low Voltage Differential Signaling »), un organe maître et au moins un organe esclave sont agencés de manière à s'échanger des trames de données non vidéo de façon bidirectionnelle, dans des créneaux (ou tranches) temporel(le)s (ou « slots ») qui sont défini(e)s par une table de programmation (ou « schedule table »), et des trames de données vidéo de façon unidirectionnelle.

Cette table (de programmation) permet avantageusement d'éviter que deux organes (ou noeuds) transmettent sensiblement simultanément des trames de données non vidéo, ce qui induirait leur perte. A titre d'exemple, la perte d'une trame de données non vidéo de paramétrage d'écran entre un calculateur multimédia et un écran tactile d'un véhicule pourrait, par exemple, induire une absence de prise compte d'un paramétrage commandé par un passager et donc un effet indésirable sur l'écran tactile.

Hélas, comme le sait l'homme de l'art, il peut parfois arriver qu'une partie des données non vidéo d'une trame n'ait pas encore été transmise par un organe à la fin du créneau temporel qui lui a été attribué par la table. Dans ce cas, cet organe achève sa transmission dans le créneau temporel suivant, alors qu'un autre organe a commencé à transmettre dans ce créneau temporel suivant. Il y a donc un risque de collision entre les deux trames, et donc un risque de perte de ces deux trames. A titre d'exemple une telle situation peut survenir en présence d'un pic de charge de calcul (ou CPU) dû à une autre tâche que la transmission de trame, car cela peut engendrer des temps inter-octets plus importants que prévu dans la trame en cours de transmission (cela peut par exemple être le cas lors d'une communication téléphonique via une application Bluetooth).

On connait par le document EP0827308 un système et un procédé pour gérer la largeur de bande d'un canal de transmission partagé connectent une station maître et une pluralité de stations clients, le canal partagé soutenant des données ABR et des données CBR. La largeur de bande est divisée par la station maître en tranches. Les tranches sont caractérisées comme tranches ABR de contestation, tranches ABR réservées et tranches CBR, et sont groupées en trames.

L'invention a donc notamment pour but d'améliorer la situation.

Elle propose notamment à cet effet un procédé dédié au contrôle de la transmission de trames par des organes maître et esclave(s) appartenant à un réseau de communication adapté à la transmission bidirectionnelle de trames de données non vidéo, dans des créneaux temporels définis par une table, et à la transmission unidirectionnelle de trames de données vidéo.

Ce procédé se caractérise par le fait qu'il comprend une étape dans laquelle, chaque fois que débute un créneau temporel d'une première durée et dédié à la transmission d'au moins une trame de données non vidéo, on déclenche une temporisation d'une seconde durée strictement inférieure à cette première durée, et, lorsqu'une fin de cette temporisation survient alors que la trame de données non vidéo n'a pas été intégralement transmise, on interdit à l'organe, qui transmet cette trame de données non vidéo, de terminer sa transmission.

Ainsi, seule la trame, dont le contenu n'a pas été entièrement transmis à la fin de la temporisation associée à son créneau temporel, sera éventuellement perdue, et non plus également la trame transmise dans le créneau temporel suivant.

Le procédé de contrôle selon l'invention peut comporter d'autres caractéristiques qui peuvent être prises séparément ou en combinaison, et notamment :
- dans l'étape, lorsque le créneau temporel est dédié à la transmission par un organe maître d'une trame de données non vidéo dite d'écriture, et que la fin de la temporisation survient alors que la trame d'écriture n'a pas été intégralement transmise, on interdit à cet organe maître soit de poursuivre sa transmission si la fin de la temporisation survient juste avant la transmission d'un octet, soit de poursuivre sa transmission après la transmission d'un dernier octet si la fin de la temporisation survient pendant la transmission de ce dernier octet ;
   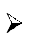 dans l'étape c'est, par exemple, l'organe maître qui s'interdit de poursuivre sa transmission ;
- dans l'étape, lorsque le créneau temporel est dédié à la transmission par l'organe maître d'une trame de données non vidéo dite d'entête, et que la fin de la temporisation survient alors que la trame d'entête n'a pas été intégralement transmise, on interdit à l'organe maître soit de poursuivre sa transmission si la fin de la temporisation survient juste avant la transmission d'un octet, soit de poursuivre sa transmission après la transmission d'un dernier octet si la fin de la temporisation survient pendant la transmission de ce dernier octet ;
   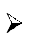 dans l'étape c'est, par exemple, l'organe maître qui s'interdit de poursuivre sa transmission ;
- dans l'étape, lorsque le créneau temporel est dédié à la transmission par un organe maître d'une trame de données non vidéo dite d'entête puis à la transmission par un organe esclave d'une trame de données non vidéo dite de lecture, et que la fin de la temporisation survient alors que la trame de lecture n'a pas été intégralement transmise, on interdit à cet organe esclave soit de poursuivre sa transmission si la fin de la temporisation survient juste avant la transmission d'un octet, soit de poursuivre sa transmission après la transmission d'un dernier octet si la fin de la temporisation survient pendant la transmission de ce dernier octet ;
   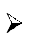 dans l'étape c'est, par exemple, l'organe esclave qui s'interdit de poursuivre sa transmission, après avoir débuté la temporisation consécutivement à une réception d'un premier champ contenu dans la trame d'entête à laquelle répond sa trame de lecture ;
- la seconde durée peut, par exemple, être au plus égale à environ 95% de la première durée. Par exemple, la seconde durée peut être choisie égale à 90% de la première durée.

L'invention propose également un dispositif de contrôle, destiné à contrôler la transmission de trames par un organe maître ou un organe esclave appartenant à un réseau de communication adapté à la transmission bidirectionnelle de trames de données non vidéo, dans des créneaux temporels définis par une table, et à la transmission unidirectionnelle de trames de données vidéo.

Ce dispositif se caractérise par le fait qu'il est agencé, chaque fois que débute un créneau temporel d'une première durée et dédié à la transmission d'au moins une trame de données non vidéo par l'organe maître ou esclave, pour déclencher une temporisation d'une seconde durée strictement inférieure à cette première durée, et, lorsqu'une fin de cette temporisation survient alors que la trame de données non vidéo n'a pas été intégralement transmise, pour interdire à l'organe de terminer sa transmission.

L'invention propose également un organe (maître ou esclave), propre à être connecté à un réseau de communication adapté à la transmission bidirectionnelle de trames de données non vidéo, dans des créneaux temporels définis par une table, et à la transmission unidirectionnelle de trames de données vidéo, et comprenant un dispositif de contrôle du type de celui présenté ci-avant.

L'invention propose également un véhicule, éventuellement de type automobile et comprenant, d'une part, un réseau de communication adapté à la transmission bidirectionnelle de trames de données non vidéo, dans des créneaux temporels définis par une table, et à la transmission unidirectionnelle de trames de données vidéo, et, d'autre part, au moins deux organes du type de celui présenté ci-avant et connectés au réseau de communication.

L'invention est particulièrement bien adaptée, bien que non limitativement, au cas où le réseau de communication est de type LVDS.

D'autres caractéristiques et avantages de l'invention apparaîtront à l'examen de la description détaillée ci-après, et des dessins annexés, sur lesquels :
- la figure 1 illustre schématiquement et fonctionnellement un véhicule comprenant un réseau de communication auquel sont connectés des organes maître et esclaves équipés chacun d'un dispositif de contrôle selon l'invention,
- la figure 2 illustre schématiquement un premier exemple de chronogramme matérialisant une trame d'écriture (T_{E}) dont au moins un octet n'a pas encore été transmis lorsque survient la fin de la temporisation associée à son créneau temporel,
- la figure 3 illustre schématiquement un deuxième exemple de chronogramme matérialisant une trame d'écriture (T_{E}) dont le dernier octet est en cours de transmission lorsque survient la fin de la temporisation associée à son créneau temporel, et
- la figure 4 illustre schématiquement un troisième exemple de chronogramme matérialisant une trame de lecture (T_{L}) transmise en réponse à une trame d'entête (T_{H}) et dont au moins un octet n'a pas encore été transmis lorsque survient la fin de la temporisation associée à son créneau temporel.

L'invention a notamment pour but de proposer un procédé de contrôle, et un dispositif de contrôle DC associé, destinés à permettre le contrôle de la transmission de trames par un organe maître OM et au moins un organe esclave OEj appartenant à un réseau de communication RC qui est adapté à la transmission bidirectionnelle de trames de données non vidéo, dans des créneaux temporels définis par une table (de programmation), et à la transmission unidirectionnelle de trames de données vidéo.

Dans ce qui suit, on considère, à titre d'exemple non limitatif, que le réseau de communication RC est installé dans un véhicule automobile V, comme par exemple une voiture. Mais l'invention n'est pas limitée à cette application. Elle concerne en effet tout système, installation ou appareil pouvant comprendre au moins un réseau de communication adapté à la transmission bidirectionnelle de trames de données non vidéo et à la transmission unidirectionnelle de trames de données vidéo. Elle concerne donc notamment les véhicules, qu'ils soient de type terrestre, maritime (ou fluvial), ou aérien, les installations, éventuellement de type industriel, et les bâtiments.

Par ailleurs, on considère dans ce qui suit, à titre d'exemple non limitatif, que le réseau de communication RC est de type LVDS (« Low Voltage Differential Signaling »). Mais l'invention n'est pas limitée à ce type de réseau de communication. D'une manière générale, l'invention concerne tout réseau de communication adapté à la transmission bidirectionnelle de trames de données non vidéo et à la transmission unidirectionnelle de trames de données vidéo.

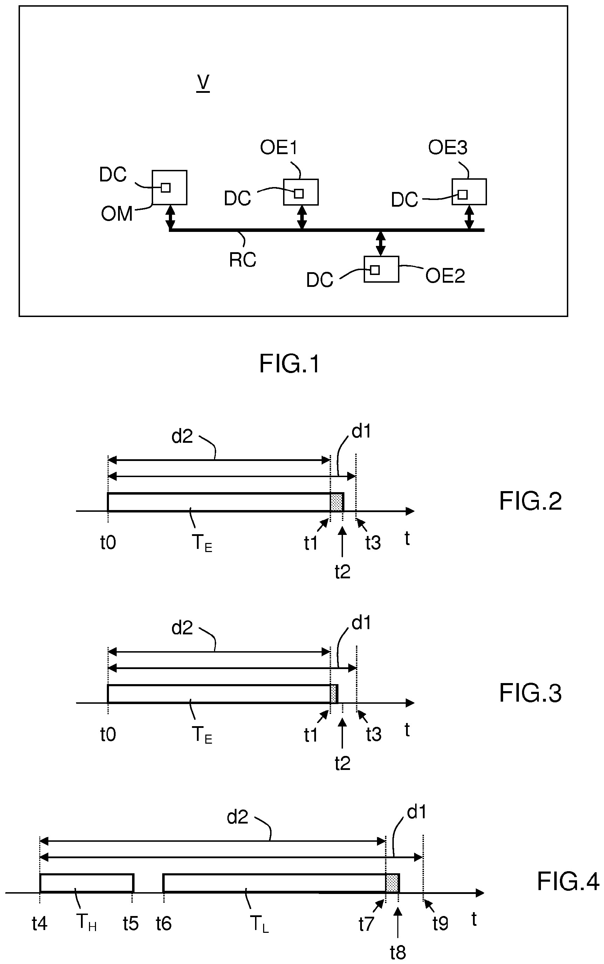

On a schématiquement représenté sur la figure 1 un véhicule comprenant un exemple non limitatif de réseau (de communication) RC. Dans cet exemple, le réseau RC (de type LVDS) comprend un bus auquel sont connectés un organe (ou noeud) maître OM et trois organes (ou noeuds) esclaves OE1 à OE3 (j = 1 à 3). Mais le nombre d'organes esclaves OEj peut prendre n'importe quelle valeur supérieure ou égale à un (1).

L'organe maître OM et les organes esclaves OEj peuvent être de tout type, dès lors qu'ils sont impliqués dans l'acquisition ou l'utilisation de données vidéo. Par exemple, dans le cas d'une voiture il peut s'agir d'un calculateur multimédia ou d'un écran tactile.

Au sein du réseau RC, l'organe maître OM et les organes esclaves OEj sont autorisés à transmettre des trames de données non vidéo dans des créneaux temporels (ou slots) qui sont prédéfinis dans une table (de programmation), connue de chacun d'entre eux.

Il est rappelé que dans un réseau LVDS l'organe maître OM peut transmettre soit des trames de données non vidéo dites d'écriture (ou « write frames ») T_{E}, soit des trames de données non vidéo dites d'entête (ou « header frames ») T_{H}, tandis que chaque organe esclave OEj peut transmettre des trames de données non vidéo dites de lecture (ou « read frames ») T_{L} en réponse respectivement à des trames de données non vidéo d'entête T_{H}. Par ailleurs, une trame d'entête T_{H} et la trame de lecture T_{L} associée sont transmises dans un même créneau temporel défini par la table.

Une trame d'écriture T_{E} est destinée à transmettre des données non vidéo à un organe esclave OEj et contient les champs suivants, toujours transmis dans le même ordre :
- un champ de synchronisation (SYNC), indiquant le début de la trame,
- un champ (DEV ADDR), indiquant à quel composant (sérialiseur, désérialiseur ou microcontrôleur esclave) la trame est adressée,
- un identifiant (ID), permettant à l'application de l'organe esclave OEj récepteur de savoir comment décoder le champ de données fonctionnelles,
- une longueur de trame (DLC), indiquant la taille de la trame ou la taille du champ de données fonctionnelles (en octet),
- le champ de données fonctionnelles (Di), contenant des données de commandes (par exemple le réglage d'un écran),
- une somme de contrôle (CRC), pour permettre à l'organe esclave OEj récepteur de vérifier que la trame reçue n'a pas été altérée au cours de la transmission.

Une trame d'entête T_{H} contient les champs suivants, toujours transmis dans le même ordre :
- un champ de synchronisation (SYNC), indiquant le début de la trame,
- un champ (DEV ADDR), indiquant à quel composant (sérialiseur, désérialiseur ou microcontrôleur esclave) la trame est adressée,
- un identifiant (ID), permettant à l'application de l'organe esclave OEj récepteur de savoir comment décoder le champ de données fonctionnelles,
- une longueur de trame (DLC), indiquant la taille de la trame demandée (en octet).

Une trame de lecture contient les champs suivants, toujours transmis dans le même ordre :
- un premier champ (ACK), indiquant le début de la trame,
- un champ de données fonctionnelles (Di), contenant des données de commandes (par exemple des données générées par un écran tactile indiquant quelle partie de l'écran est touchée par un utilisateur),
- une somme de contrôle (CRC), pour permettre à l'organe maître OM récepteur de vérifier que la trame reçue n'a pas été altérée au cours de la transmission.

Le procédé (de contrôle), selon l'invention, comprend une étape qui est effectuée chaque fois que débute un créneau temporel d'une première durée d1 et dédié à la transmission d'au moins une trame de données non vidéo.

Durant cette étape, on déclenche une temporisation d'une seconde durée d2 strictement inférieure à la première durée d1 (du créneau temporel considéré), et, lorsque la fin de cette temporisation survient alors que la trame de données non vidéo n'a pas été intégralement transmise, on interdit à l'organe OM ou OEj qui transmet cette trame de données non vidéo de terminer sa transmission.

En d'autres termes, pour éviter la collision entre une partie d'une première trame risquant d'être transmise dans le créneau temporel suivant et une seconde trame transmise dans ce créneau temporel suivant, on interrompt la transmission de la fin de la première trame. De ce fait, seule la première trame est perdue, et non plus également la seconde trame.

Par exemple, la seconde durée d2 peut être choisie au plus égale à environ 95% de la première durée d1. Plus préférentiellement, cette seconde durée d2 peut être choisie égale à 90% de la première durée d1. D'une manière générale la seconde durée d2 est choisie en fonction de la précision des horloges internes qui équipent les organes OM et OEj. Cette seconde durée d2 est donc choisie la plus grande possible par rapport à la première durée d1, en se réservant une marge pour les dérives d'horloge et éventuellement pour la fin de transmission d'un dernier octet (comme on le verra plus loin).

Afin d'éviter de perdre la première trame quelle que soit la quantité de la trame qui n'a pas encore été transmise, et en particulier lorsqu'il ne reste qu'une toute petite partie de cette dernière à transmettre (et plus précisément une partie de son dernier octet), on peut réaliser une analyse de ce qui reste à transmettre lorsque survient la fin de la temporisation associée.

A cet effet, lorsque le créneau temporel est dédié à la transmission par l'organe maître OM d'une trame d'écriture T_{E} et que la fin de la temporisation survient alors que la trame d'écriture T_{E} n'a pas été intégralement transmise, on peut interdire à l'organe maître OM soit de poursuivre sa transmission si la fin de la temporisation survient juste avant la transmission d'un octet, soit de poursuivre sa transmission après la transmission du dernier octet si la fin de la temporisation survient pendant la transmission de ce dernier octet.

On comprendra que dans la première alternative la trame d'écriture T_{E} est perdue, tandis que dans la seconde alternative on est certain que la trame d'écriture T_{E} est intégralement transmise dans le créneau temporel associé et donc qu'elle ne va pas induire de collision avec la trame du créneau temporel suivant.

On a schématiquement illustré sur les figures 2 et 3 deux exemples de chronogrammes permettant de faciliter la compréhension des deux alternatives précitées.

Le premier exemple de chronogramme matérialise une trame d'écriture T_{E} dont au moins un octet n'a pas encore été transmis lorsque survient la fin de la temporisation associée à son créneau temporel. Plus précisément, à l'instant t0 l'organe maître OM commence à transmettre une trame d'écriture T_{E} dans le créneau temporel qui est défini dans la table. Par conséquent, ce créneau temporel et donc la temporisation associée débutent à ce même instant t0. La fin de cette temporisation doit survenir à un instant t1 (avec t1 = t0 + d2), tandis que la fin du créneau temporel doit survenir à un instant t3 (avec t3 = t0 + d1).

Dans ce premier exemple, on suppose qu'à l'instant t1 au moins un octet entier de la trame d'écriture T_{E} n'a pas encore été transmis par l'organe maître OM. Ici la fin de la transmission de la trame d'écriture T_{E} doit survenir à un instant t2 compris entre t1 et t3. Par conséquent, l'organe maître OM interrompt immédiatement la transmission de la trame d'écriture T_{E}, et donc cette dernière sera perdue.

Le deuxième exemple de chronogramme matérialise une trame d'écriture T_{E} dont le dernier octet est en cours de transmission lorsque survient la fin de la temporisation associée à son créneau temporel. Plus précisément, à l'instant t0 l'organe maître OM commence à transmettre une trame d'écriture T_{E} dans le créneau temporel qui est défini dans la table. Par conséquent, ce créneau temporel et donc la temporisation associée débutent à ce même instant t0. La fin de cette temporisation doit survenir à un instant t1 (avec t1 = t0 + d2), tandis que la fin du créneau temporel doit survenir à un instant t3 (avec t3 = t0 + d1).

Dans ce deuxième exemple, on suppose qu'à l'instant t1 une partie du dernier octet de la trame d'écriture T_{E} n'a pas encore été transmise par l'organe maître OM. Ici la fin de la transmission de la trame d'écriture T_{E} doit survenir à un instant t2 compris entre t1 et t3, mais très proche de t1. Par conséquent, l'organe maître OM poursuit la transmission de la trame d'écriture T_{E}, et donc cette dernière ne sera pas perdue et n'induira pas de collision avec la trame transmise pendant le créneau temporel suivant (débutant à l'instant t3).

De même, lorsque le créneau temporel est dédié à la transmission par l'organe maître OM d'une trame d'entête T_{H} et que la fin de la temporisation survient alors que la trame d'entête T_{H} n'a pas été intégralement transmise, on peut interdire à l'organe maître OM soit de poursuivre sa transmission si la fin de la temporisation survient juste avant la transmission d'un octet, soit de poursuivre sa transmission après la transmission du dernier octet si la fin de la temporisation survient pendant la transmission de ce dernier octet.

On comprendra que dans la première alternative la trame d'entête T_{H} est perdue, tandis que dans la seconde alternative on est certain que la trame d'entête T_{H} est intégralement transmise dans le créneau temporel associé et donc qu'elle ne va pas induire de collision avec la trame du créneau temporel suivant.

En présence, notamment, de l'option précitée d'analyse du reste de la trame d'écriture T_{E} ou d'entête T_{H} à transmettre, il est avantageux que ce soit l'organe maître OM qui s'interdise de poursuivre sa transmission. Pour ce faire, il peut avantageusement comprendre un dispositif de contrôle DC chargé de mettre en oeuvre le procédé de contrôle selon l'invention, comme illustré non limitativement sur la figure 1. Notamment, ce dispositif de contrôle DC est chargé de déclencher la temporisation au début de chaque créneau temporel impliquant son organe maître OM, et de vérifier si la trame d'écriture T_{E} ou d'entête T_{H} devant être transmise l'a bien été intégralement lorsqu'expire la temporisation associée. Il peut également et optionnellement être agencé pour analyser ce qui reste à transmettre d'une trame d'écriture T_{E} ou d'entête T_{H} si l'organe maître OM n'a pas fini de la transmettre lorsqu'expire la temporisation associée.

Un tel dispositif de contrôle DC peut être réalisé sous la forme de modules logiciels (ou informatiques ou « software »), ou bien de circuits électroniques (ou « hardware »), ou encore d'une combinaison de circuits électroniques et de modules logiciels. On notera que ce dispositif de contrôle DC peut être considéré comme un automate.

De même, lorsque le créneau temporel est dédié à la transmission par l'organe maître OM d'une trame d'entête T_{H} puis à la transmission par un organe esclave OEj d'une trame de lecture T_{L}, et que la fin de la temporisation survient alors que la trame de lecture T_{L} n'a pas été intégralement transmise, on peut interdire à l'organe esclave OEj concerné soit de poursuivre sa transmission si la fin de la temporisation survient juste avant la transmission d'un octet, soit de poursuivre sa transmission après la transmission du dernier octet si la fin de la temporisation survient pendant la transmission de ce dernier octet.

On comprendra que dans la première alternative la trame de lecture T_{L} est perdue, tandis que dans la seconde alternative on est certain que la trame de lecture T_{L} est intégralement transmise dans le créneau temporel associé et donc qu'elle ne va pas induire de collision avec la trame du créneau temporel suivant.

On a schématiquement illustré sur la figure 4 un troisième exemple de chronogramme permettant de faciliter la compréhension de la première alternative précitée.

Le troisième exemple de chronogramme matérialise une trame de lecture T_{L} dont au moins un octet n'a pas encore été transmis lorsque survient la fin de la temporisation associée à son créneau temporel. Plus précisément, à l'instant t4 l'organe maître OM commence à transmettre une trame d'entête T_{H} dans le créneau temporel qui est défini dans la table. Par conséquent, ce créneau temporel et donc la temporisation associée débutent à ce même instant t0 y compris pour l'organe esclave OEj qui est concerné par cette trame d'entête T_{H} (on considère en effet que la durée de transmission du premier champ (SYNC) de la trame d'entête T_{H} entre l'organe maître OM et l'organe esclave OEj est négligeable). La fin de cette temporisation doit survenir à un instant t7 (avec t7 = t4 + d2), tandis que la fin du créneau temporel doit survenir à un instant t9 (avec t9 = t4 + d1). A l'instant t5 s'achève la transmission de la trame d'entête T_{H}. A l'instant t6 (postérieur à t5), l'organe esclave OEj commence à transmettre sa trame de lecture T_{L}.

Dans ce troisième exemple, on suppose qu'à l'instant t7 au moins un octet entier de la trame de lecture T_{L} n'a pas encore été transmis par l'organe esclave OEj. Ici la fin de la transmission de la trame de lecture T_{L} doit survenir à un instant t8 compris entre t7 et t9. Par conséquent, l'organe esclave OEj interrompt immédiatement la transmission de la trame de lecture T_{L}, et donc cette dernière sera perdue.

En présence, notamment, de l'option précitée d'analyse du reste de la trame de lecture T_{L} à transmettre, il est avantageux que ce soit l'organe esclave OEj concerné qui s'interdise de poursuivre sa transmission, après avoir débuté la temporisation consécutivement à la réception d'un premier champ (SYNC) contenu dans la trame d'entête T_{H} à laquelle répond sa trame de lecture T_{L}. On comprendra en effet que l'organe esclave OEj ne peut savoir qu'un créneau temporel dédié à la lecture de données non vidéo a débuté que lorsqu'il commence à recevoir le tout premier champ de la trame d'entête T_{H} associée. La réception de ce premier champ (SYNC) de la trame d'entête T_{H} par un organe esclave OEj est donc ici considérée comme le début de la temporisation associée au créneau temporel en cours.

Chaque organe esclave OEj peut avantageusement comprendre un dispositif de contrôle DC chargé de mettre en oeuvre le procédé de contrôle selon l'invention, comme illustré non limitativement sur la figure 1. Notamment, ce dispositif de contrôle DC est chargé de déclencher la temporisation au début de chaque créneau temporel impliquant son organe esclave OEj, et de vérifier si la trame de lecture T_{L} devant être transmise l'a bien été intégralement lorsqu'expire la temporisation associée. Il peut également et optionnellement être agencé pour analyser ce qui reste à transmettre d'une trame de lecture T_{L} si l'organe esclave OEj n'a pas fini de la transmettre lorsqu'expire la temporisation associée.

Un tel dispositif de contrôle DC peut être réalisé sous la forme de modules logiciels, ou bien de circuits électroniques, ou encore d'une combinaison de circuits électroniques et de modules logiciels. On notera que ce dispositif de contrôle DC peut être également considéré comme un automate.

On notera également que dans une variante de réalisation non illustrée le dispositif de contrôle DC pourrait être externe aux organes maître OM et esclaves OEj. Dans ce cas, il doit être installé dans un autre organe couplé au réseau RC et qui assure, par exemple, la gestion (ou la supervision) de ce dernier (RC), et donc qui est couplé aux organes maître OM et esclaves OEj autrement que par le réseau RC. Dans cette variante de réalisation, le dispositif de contrôle DC ne peut pas effectuer d'analyse in situ de reste de trame de lecture T_{L} ou d'écriture T_{E} ou d'entête T_{H} à transmettre. Par conséquent, l'interruption de la transmission est décidée dès que la trame à transmettre n'a pas été intégralement transmise lorsque survient la fin de la temporisation associée.

L'invention permet d'assurer un déterminisme et une robustesse des transmissions entre deux organes (ou noeuds) du réseau de communication, en se prémunissant des éventuels problèmes de collision et en garantissant un temps de latence sur la liaison bidirectionnelle.

## Revendications

1. Procédé de contrôle de la transmission de trames par des organes maître (OM) et esclave(s) (OEj) appartenant à un réseau de communication (RC) adapté à la transmission bidirectionnelle de trames de données non vidéo, dans des créneaux temporels définis par une table, et à la transmission unidirectionnelle de trames de données vidéo, **caractérisé en ce qu'**il comprend une étape dans laquelle, chaque fois que débute un créneau temporel d'une première durée et dédié à la transmission d'au moins une trame de données non vidéo, on déclenche une temporisation d'une seconde durée strictement inférieure à ladite première durée, et, lorsqu'une fin de ladite temporisation survient alors que ladite trame de données non vidéo n'a pas été intégralement transmise, on interdit à l'organe (OM, OEj) transmettant cette trame de données non vidéo de terminer sa transmission.

2. Procédé selon la revendication 1, **caractérisé en ce que** dans ladite étape, lorsque le créneau temporel est dédié à la transmission par ledit organe maître (OM) d'une trame de données non vidéo dite d'écriture, et que la fin de ladite temporisation survient alors que ladite trame d'écriture n'a pas été intégralement transmise, on interdit audit organe maître (OM) soit de poursuivre sa transmission si la fin de ladite temporisation survient juste avant la transmission d'un octet, soit de poursuivre sa transmission après la transmission d'un dernier octet si la fin de ladite temporisation survient pendant la transmission de ce dernier octet.

3. Procédé selon l'une des revendications 1 et 2, **caractérisé en ce que** dans ladite étape, lorsque le créneau temporel est dédié à la transmission par ledit organe maître (OM) d'une trame de données non vidéo dite d'entête, et que la fin de ladite temporisation survient alors que ladite trame d'entête n'a pas été intégralement transmise, on interdit audit organe maître (OM) soit de poursuivre sa transmission si la fin de ladite temporisation survient juste avant la transmission d'un octet, soit de poursuivre sa transmission après la transmission d'un dernier octet si la fin de ladite temporisation survient pendant la transmission de ce dernier octet.

4. Procédé selon l'une des revendications 2 et 3, **caractérisé en ce que** dans ladite étape c'est ledit organe maître (OM) qui s'interdit de poursuivre sa transmission.

5. Procédé selon l'une des revendications 1 à 4, **caractérisé en ce que** dans ladite étape, lorsque le créneau temporel est dédié à la transmission par ledit organe maître (OM) d'une trame de données non vidéo dite d'entête puis à la transmission par un organe esclave (OEj) d'une trame de données non vidéo dite de lecture, et que la fin de ladite temporisation survient alors que ladite trame de lecture n'a pas été intégralement transmise, on interdit audit organe esclave (OEj) soit de poursuivre sa transmission si la fin de ladite temporisation survient juste avant la transmission d'un octet, soit de poursuivre sa transmission après la transmission d'un dernier octet si la fin de ladite temporisation survient pendant la transmission de ce dernier octet.

6. Procédé selon la revendication 5, **caractérisé en ce que** dans ladite étape c'est ledit organe esclave (OEj) qui s'interdit de poursuivre sa transmission, après avoir débuté ladite temporisation consécutivement à une réception d'un premier champ contenu dans ladite trame d'entête à laquelle répond sa trame de lecture.

7. Procédé selon l'une des revendications 1 à 6, **caractérisé en ce que** ladite seconde durée est au plus égale à environ 95% de ladite première durée.

8. Dispositif (DC) pour contrôler la transmission de trames par un organe maître (OM) ou un organe esclave (OEj) appartenant à un réseau de communication (RC) adapté à la transmission bidirectionnelle de trames de données non vidéo, dans des créneaux temporels définis par une table, et à la transmission unidirectionnelle de trames de données vidéo, **caractérisé en ce qu'**il est agencé, chaque fois que débute un créneau temporel d'une première durée et dédié à la transmission d'au moins une trame de données non vidéo par ledit organe maître (OM) ou esclave (OEj), pour déclencher une temporisation d'une seconde durée strictement inférieure à ladite première durée, et, lorsqu'une fin de ladite temporisation survient alors que ladite trame de données non vidéo n'a pas été intégralement transmise, pour interdire audit organe (OM, OEj) de terminer sa transmission.

9. Organe (OM, OEj) propre à être connecté à un réseau de communication (RC) adapté à la transmission bidirectionnelle de trames de données non vidéo, dans des créneaux temporels définis par une table, et à la transmission unidirectionnelle de trames de données vidéo, **caractérisé en ce qu'**il comprend un dispositif de contrôle (DC) selon la revendication 8.

10. Véhicule (V) comprenant un réseau de communication (RC) adapté à la transmission bidirectionnelle de trames de données non vidéo, dans des créneaux temporels définis par une table, et à la transmission unidirectionnelle de trames de données vidéo, **caractérisé en ce qu'**il comprend au moins deux organes (OM, OEj) selon la revendication 9, connectés audit réseau de communication (RC).

## Patentansprüche

1. Verfahren zur Steuerung der Übertragung von Frames durch Master (OM) und Slave (OEj)-Organe, die zu einem Kommunikationsnetzwerk (RC) gehören, das für die bidirektionale Übertragung anderer als Video-Datenframes in Zeitfenstern geeignet ist, die von einer Tabelle definiert werden und für die unidirektionale Übertragung von Video-Datenframes geeignet ist, **dadurch gekennzeichnet, dass** es einen Schritt umfasst, bei dem jedes Mal, wenn ein Zeitfenster einer ersten Dauer beginnt, das für die Übertragung mindestens eines anderen als Video-Datenframes bestimmt ist, eine Verzögerungszeit von einer Sekunde ausgelöst wird, die absolut kürzer als die erste Dauer ist und wenn das Ende der Verzögerungszeit eintritt, während das andere als Video-Datenframe nicht vollständig übertragen wurde, dem Organ (OM, OEj), das dieses andere als Video-Datenframe überträgt, untersagt wird, die Übertragung zu beenden.

2. Verfahren nach Anspruch 1, **dadurch gekennzeichnet, dass** der Schritt, wenn das Zeitfenster für die Schreiben genannte Übertragung eines anderen als Video-Datenframes durch das Master-Organ (OM) bestimmt ist und das Ende der Verzögerungszeit eintritt, während das Schreib-Frame nicht vollständig übertragen wurde, dem Master-Organ (OM) entweder untersagt wird, die Übertragung fortzuführen, wenn das Ende der Verzögerungszeit unmittelbar vor der Übertragung eines Oktett eintritt oder die Übertragung nach der Übertragung eines letzten Oktett fortzuführen, wenn das Ende der Verzögerungszeit während der Übertragung dieses letzten Oktett eintritt.

3. Verfahren nach einem der Ansprüche 1 und 2, **dadurch gekennzeichnet, dass** in dem Schritt, wenn das Zeitfenster für die Header genannte Übertragung eines anderen als Video-Datenframes durch das Master-Organ (OM) bestimmt ist und das Ende der Verzögerungszeit eintritt, während der Header-Frame nicht vollständig übertragen wurde, dem Master-Organ (OM) entweder untersagt wird, die Übertragung fortzuführen, wenn das Ende der Verzögerungszeit unmittelbar vor der Übertragung eines Oktett eintritt oder die Übertragung nach der Übertragung eines letzten Oktett fortzuführen, wenn das Ende der Verzögerungszeit während der Übertragung dieses letzten Oktett eintritt.

4. Verfahren nach einem der Ansprüche 2 und 3, **dadurch gekennzeichnet, dass** es in dem Schritt das Master-Organ (OM) ist, das darauf verzichtet, seine Übertragung fortzusetzen.

5. Verfahren nach einem der Ansprüche 1 bis 4, **dadurch gekennzeichnet, dass** in dem Schritt, wenn das Zeitfenster für die Übertragung durch das Masterorgan (OM) eines anderen Video-Datenframes, genannt Header, und dann zur Übertragung durch ein Slave-Organ (OEj) eines anderen als Video-Datenframes, genannt Wiedergabe bestimmt ist und das Ende der Verzögerung eintritt, wenn der Wiedergabe-Frame nicht vollständig übertragen wurde, dem Slave-Organ (OEj) untersagt wird, entweder die Übertragung fortzuführen, wenn das Ende der Verzögerungszeit unmittelbar vor der Übertragung eines Oktett eintritt oder die Übertragung nach der Übertragung eines letzten Oktett fortzuführen, wenn das Ende der Verzögerungszeit während der Übertragung dieses letzten Oktett eintritt.

6. Verfahren nach Anspruch 5, **dadurch gekennzeichnet, dass** in dem Schritt das Slave-Organ (OEj) darauf verzichtet, seine Übertragung fortzuführen, nachdem die Zeitverzögerung nach Empfang eines ersten Feldes begonnen hat, das in dem Header Frame enthalten ist, auf den der Lese-Frame antwortet.

7. Verfahren nach einem der Ansprüche 1 bis 6, **dadurch gekennzeichnet, dass** die zweite Dauer maximal etwa 95 % der ersten Dauer entspricht.

8. Vorrichtung (DC) zur Kontrolle der Übertragung von Frames durch ein Master-Organ (OM) oder ein Slave-Organ (OEj), die zu einem Kommunikationsnetzwerk (RC) gehört, das für die bidirektionale Übertragung von anderen als Video-Frames in Zeitfenstern geeignet ist, die in einer Tabelle festgelegt sind und für die unidirektionale Übertragung von Video-Datenframes geeignet ist, **dadurch gekennzeichnet, dass** sie derart eingerichtet ist, dass jedes Mal, wenn ein Zeitfenster einer ersten Dauer beginnt, das für die Übertragung mindestens eines anderen als Video-Datenframes durch das Master-Organ (OM) oder Slave-Organ (OEj) bestimmt ist, eine Verzögerung einer zweiten, absolut kürzeren Dauer als die erste Dauer ausgelöst wird und wenn das Ende der Verzögerung eintritt, während der andere als Video-Datenframe noch nicht vollständig übertragen wurde, um dem Organ (OM, OEj) zu untersagen, die Übertragung zu beenden.

9. Organ (OM, OEj), das dazu geeignet ist, an ein Kommunikationsnetzwerk (RC) angeschlossen zu werden, das für die bidirektionale Übertragung von anderen als Video-Datenframes in Zeitfenstern geeignet ist, die in einer Tabelle definiert sind und für die unidirektionale Übertragung von Video-Datenframes geeignet ist, **dadurch gekennzeichnet, dass** es eine Kontrollvorrichtung (DC) gemäß Anspruch 8 umfasst.

10. Fahrzeug (V), das ein Kommunikationsnetzwerk (RC) umfasst, das für die bidirektionale Übertragung anderer als Video-Datenframes in Zeitfenstern geeignet ist, die in einer Tabelle definiert sind und für die unidirektionale Übertragung von Video-Datenframes geeignet ist, **dadurch gekennzeichnet, dass** es mindestens zwei Organe 2 (OM, OEj) nach Anspruch 9 umfasst, die mit dem Kommunikationsnetzwerk (RC) verbunden sind.

## Claims

1. A method for controlling the transmission of frames by master (OM) and slave (OEj) units belonging to a communication network (RC) adapted for the bidirectional transmission of non-video data frames, in time slots defined by a table, and for the unidirectional transmission of video data frames, **characterized in that** it includes a step in which, each time a time slot of a first duration and dedicated to the transmission of at least one non-video data frame begins, a timeout of a second duration, strictly lower than said first duration, is triggered, and, when an end of said timeout occurs while said non-video data frame has not been transmitted in full, the unit (OM, OEj) transmitting this non-video data frame is prohibited from completing its transmission.

2. The method according to Claim 1, **characterized in that** in said step, when the time slot is dedicated to the transmission by said master unit (OM) of a non-video data frame, designated write frame, and when the end of said timeout occurs while said write frame has not been transmitted in full, said master unit (OM) is prohibited either from continuing its transmission if the end of said timeout exists just before the transmission of an octet, or from continuing its transmission after the transmission of a last octet if the end of said timeout exists during the transmission of this last octet.

3. The method according to one of Claims 1 and 2, **characterized in that** in said step, when the time slot is dedicated to the transmission by said master unit (OM) of a non-video data frame, designated header frame, and when the end of said timeout exists while said header frame has not been transmitted in full, said master unit (OM) is prohibited either from continuing its transmission if the end of said timeout exists just before the transmission of an octet, or from continuing its transmission after the transmission of a last octet, if the end of said timeout exists during the transmission of this last octet.

4. The method according to one of Claims 2 and 3, **characterized in that** in said step it is said master unit (OM) which prohibits itself from continuing its transmission.

5. The method according to one of Claims 1 to 4, **characterized in that** in said step, when the time slot is dedicated to the transmission by said master unit (OM) of a non-video data frame, designated header frame, then to the transmission by a slave unit (OEj) of a non-video data frame, designated read frame, and when the end of said timeout exists while said read frame has not been transmitted in full, said slave unit (OEj) is prohibited either from continuing its transmission if the end of said timeout exists just before the transmission of an octet, or from continuing its transmission after the transmission of a last octet if the end of said timeout exists during the transmission of this last octet.

6. The method according to Claim 5, **characterized in that** in said step, it is said slave unit (OEj) which prohibits itself from continuing its transmission, after having begun said timeout consecutively to a reception of a first field contained in said header frame to which its read frame responds.

7. The method according to one of Claims 1 to 6, **characterized in that** said second duration is at most equal to approximately 95% of said first duration.

8. A device (DC) for controlling the transmission of frames by a master unit (OM) or a slave unit (OEj) belonging to a communication network (RC) adapted for the bidirectional transmission of non-video data frames, in time slots defined by a table, and for the unidirectional transmission of video data frames, **characterized in that** it is arranged, each time a time slot begins of a first duration and dedicated to the transmission of at least one non-video data frame by said master (OM) or slave (OEj) unit, for triggering a timeout of a second duration strictly lower than said first duration, and, when an end of said timeout exists while said non-video data frame has not been transmitted in full, for prohibiting said unit (OM, OEj) from completing its transmission.

9. A unit (OM, OEj) suitable to be connected to a communication network (RC) adapted to the bidirectional transmission of non-video data frames, in time slots defined by a table, and to the unidirectional transmission of video data frames, **characterized in that** it includes a control device (DC) according to Claim 8.

10. A vehicle (V) including a communication network (RC) adapted to the bidirectional transmission of non-video data frames, in time slots defined by a table, and to the unidirectional transmission of video data frames, **characterized in that** it includes at least two units (OM, OEj) according to Claim 9, connected to said communication network (RC).
